# EUROPEAN PATENT APPLICATION

(11) **EP 4 079 131 A1**
(43) Date of publication of application: **26.10.2022**
(21) Application number: 22169247.8
(22) Date of filing: 21.04.2022
(51) Int. Cl.: A01C 17/00, A01C 21/00

(54) **METHOD OF DISTRIBUTION AND DISTRIBUTOR GROUP OF A CHEMICAL OR ORGANIC PRODUCT FOR THE TREATMENT OF PLANTS**

(30) Priority: 21.04.2021 IT 202100010154
(71) Applicant: C.E.A. Di Cornaglia s.r.l., 12045 Fossano (CN) (IT)
(72) Inventor: CORNAGLIA, Giovanni Paolo, 12045 FOSSANO (CN) (IT)
(74) Representative: Studio Torta S.p.A.

(57) **Abstract**

A distribution method and a distributor assembly (2) of a chemical or organic product (P) for the treatment of plants, according to which the chemical or organic product contained in a container (10) moved in a direction of forward movement (8) between the plants (7) is dispensed through at least one outlet (12) in a rectilinear dispensing direction (21) transverse to the direction of forward movement (8) by detecting, during the forward movement of the container (10) and through a detection device (19), the presence of each of the plants (6) to be treated, by dosing, for each of the detected plants, a respective amount of chemical or organic product and by controlling a dispensing device (15) in response to a plant presence signal emitted by the detection device (19) so as to dispense the amount of product at least when the outlet (12) transits in front of the detected plant and to suspend the dispensing after the detected plant and before the following one.

## Description

### CROSS-REFERENCE TO RELATED APPLICATIONS

This Patent Application claims priority from Italian Patent Application No. 102021000010154 filed on April 21, 2021

### TECHNICAL FIELD OF THE INVENTION

The present invention relates to a distribution method and to a distributor assembly of a chemical or organic product for the treatment of plants.

In particular, the present invention is advantageously applied to the fertilisation or dressing of plants, to which the following disclosure will explicitly refer without thereby losing generality.

### STATE OF THE ART

As is known, in plantations or cultivations in general, plants are distributed on the ground, generally, but not necessarily, so as to form rows of plants. In each row, the plants are then arranged at an almost constant distance from one another, in some cases, but also at a sensibly variable distance from one another, in other cases.

Depending on the plantation, the plants can have contained dimensions, for example, in the case of new plantations or of plants of the shrub type, but also considerable dimensions and can have a single stalk or several stalks that all depart from the ground.

Then, in some cases, the plants rise on flat lands, in other cases the lands can have irregularities such as humps or depressions.

In all of the cases, the plants must be periodically fertilised or dressed and, in general, treated with chemical or organic products.

To date the dressing is of uniform type, i.e. a same amount of dressing is spread on the land by using, in the case of granular products, centrifugal fertiliser spreader machines carried by agricultural tractors which move forward between two rows of plants.

Such dressing mode, although used, is not completely satisfactory since, on the one hand, it entails the use of large amounts of fertiliser, whose cost is far from negligible and, on the other hand, only a part of the spread fertiliser concretely concurs to the fertilisation of the plants and, in particular the one which is arranged in the immediate closeness of the plant, whereas the remaining part does not produce effect or even an effect contrary to the one desired since it is absorbed by shrubs and infesting grasses, in general, normally present between the rows of plants and between two consecutive plants and which must then be regularly weeded.

### SUBJECT AND SUMMARY OF THE INVENTION

The object of the present invention is to manufacture a distributor assembly of a chemical or organic product for the treatment of plants, which allows solving the above-mentioned problems in a simple and cost-effective manner.

A particular object of the present invention is to manufacture a distributor assembly, which allows drastically reducing the consumption of fertiliser and is, simultaneously, simple and cost-effective to manufacture and simple to use.

According to the present invention a distributor assembly for the distribution of a chemical or organic product is manufactured, as claimed in claim 1.

The present invention further relates to a distribution method of a chemical or organic product for the treatment of plants.

According to the present invention a distribution method of a chemical or organic product for the treatment of plants is provided, as claimed in claim 10.

### BRIEF DESCRIPTION OF THE DRAWINGS

The invention will now be described with reference to the accompanying drawings, which illustrate a non-limiting example embodiment thereof, wherein:
Figure 1 is a plan view of an agricultural tractor carrying a distributor assembly of chemical or organic material and arranged between two rows of plants to be treated;
Figure 2 illustrates, in a perspective view, the distributor assembly of Figure 1 arranged in a detection position of a plant of the rows of plants;
Figure 3 is a figure similar to Figure 2 and illustrates the distributor assembly of Figure 1 in a dispensing condition of the chemical or organic material; and
Figures 4 and 5 illustrate a detail of Figures 2 and 3 arranged in two different operational positions.

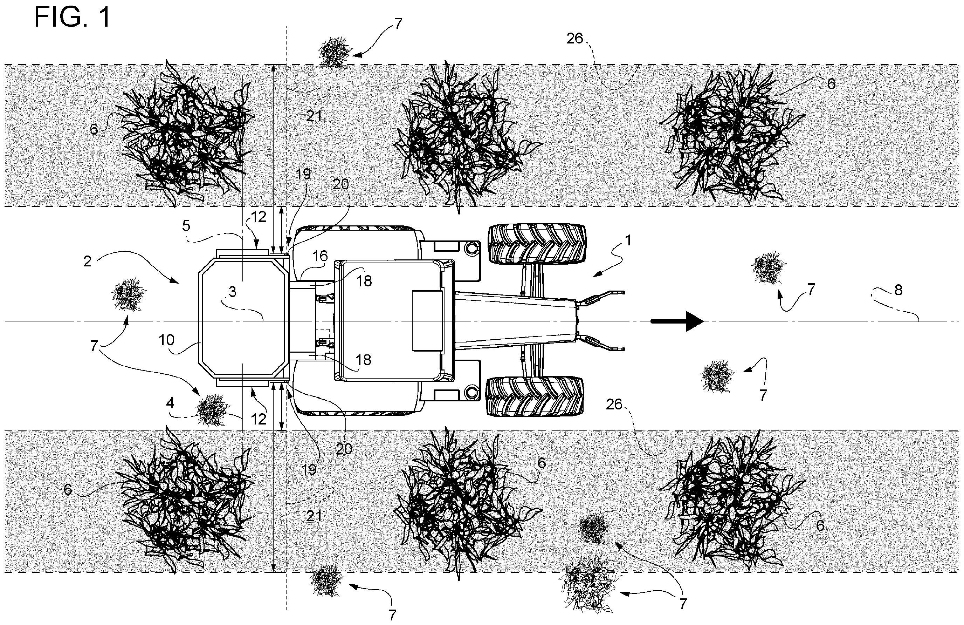

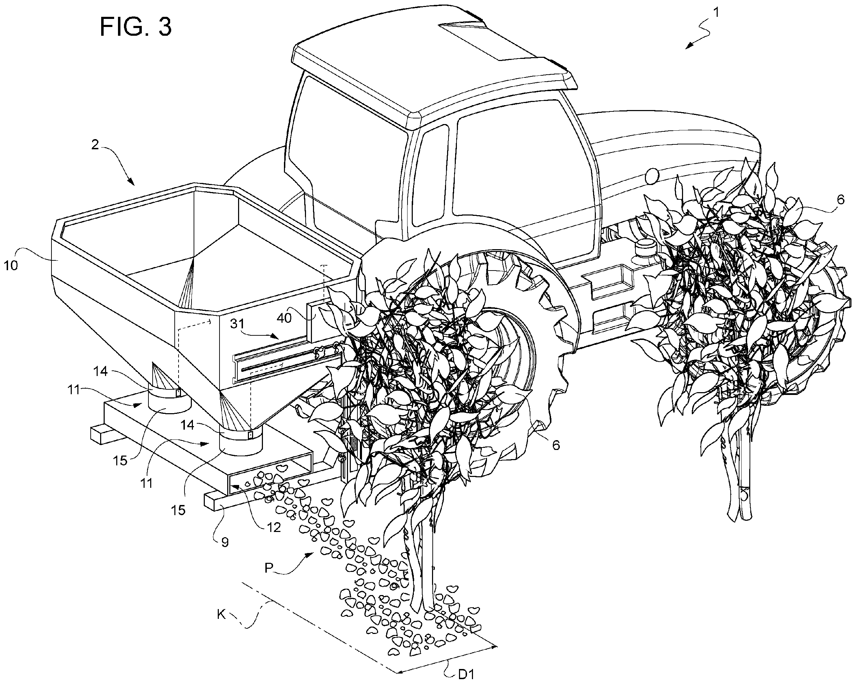

In Figure 1, reference numeral 1 indicates, as a whole, an agricultural tractor, known per se, and carrying a distributor assembly 2 for the distribution of a chemical product P (Figure 3), in the specific case powder or granular dressing.

### DETAILED DESCRIPTION OF PREFERRED EMBODIMENTS OF THE INVENTION

Still with reference to Figure 1, the distributor assembly 2 has a longitudinal symmetry axis 3 and is configured to move the product P forward in a discontinuous or intermittent manner, in two opposing directions 4 and 5 and towards some plants 6 of a plurality of plants 7 arranged on lateral sides opposite a direction of forward movement 8 of the tractor 1 and of the distributor assembly 2.

The distributor assembly 2, which in the described example is of centrifugal hopper type, comprises a support frame 9 connected, in a manner known per se, to the tractor 1 and a container 10 for containing the product P and supported by the frame 9.

The distributor assembly 2 further comprises two motor driven intermittent dosing and dispensing devices, indicated by 11, which have respective inlets of the product which communicate with the container 10 and respective outlets 12 arranged opposing and on axial parts opposite the axis 3 for sending discontinuous flows of the chemical product along the respective dispensing directions 4,5 transverse to the axis 3 and to the direction of forward movement 8.

In the described example, the devices 11 are constructively identical to and independent of one another. According to a variation not illustrated, the assembly 2 comprises a single motor driven dosing and dispensing device 11.

Each device 11 comprises a dosing block 14 of its own with a dosing solenoid valve for dosing a set amount of product P for each one of the plants 6 and a motor driven centrifugal dispensing assembly 15, known per se, for moving forward the given amount of product towards a specific plant 6, as it will be better specified in the following.

Each device 11 is controlled irrespective of the other device 11 and as a function of the forward movement speed of the tractor 1 by an electronic command and control unit 16, which constitutes part of the assembly 2 and is schematically illustrated in Figures 1,4 and 5.

Each device 11 further comprises a respective sensor assembly 18 electrically connected to the unit 16 and configured to detect the presence of the plants during the forward movement of the tractor 1 in the direction of forward movement 8 and to send, for each detected plant, a respective presence signal.

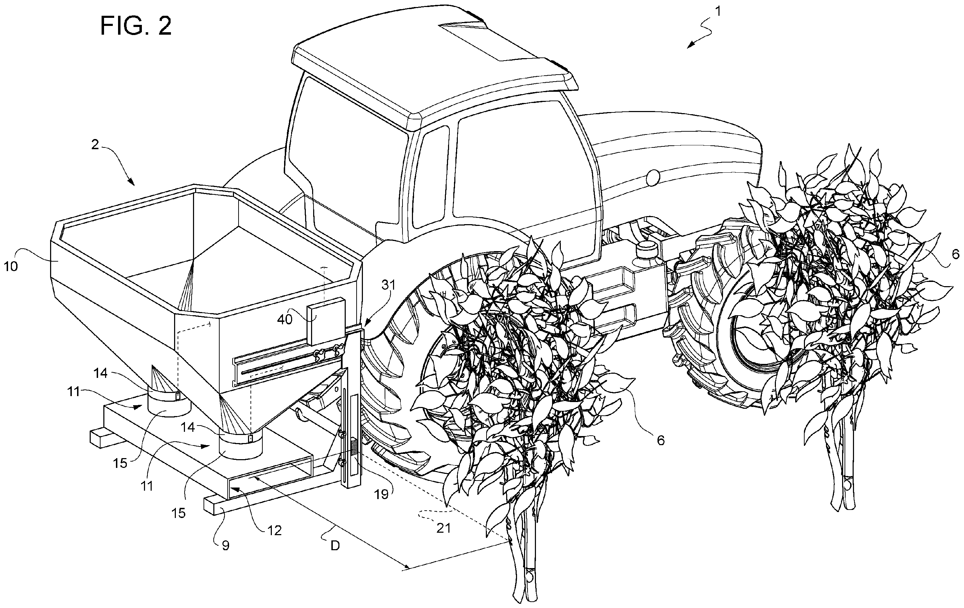

In particular, each sensor assembly 18, which is independent of the other sensor assembly 18, comprises a laser device 19, in turn, comprising a respective emitter 20 configured to emit a laser beam in an emission direction 21 (Fig.1) transverse to the longitudinal direction 8 and to detect the distances D of the plants from the emitter 20 in the emission direction 21 (Figure 2).

Conveniently, the emission direction 21 is parallel to the dispensing direction 4,5 and is orthogonal to the direction of forward movement 8.

Still with reference to Figures 1,4 and 5, each sensor assembly 18 comprises a setting assembly 24, which allows the operator to select which between the plants 7 present along the direction 8 have to be dressed and which have to be excluded from the dressing, i.e. not taken into consideration.

The setting assembly 24 comprises, in turn, a configuration block 25 of the relative laser device 19. Each block 25 allows, in the configuration step of the assembly 2, setting a respective assembly or range of distances D chosen so as to define, for each side of the assembly 2 and of the tractor 1, a respective virtual corridor 26 (Fig.1) containing the sole plants 6 to be taken into consideration for the dressing and thus to be dressed. Each configuration block 25 further comprises a comparator block 27 for comparing the distances D progressively detected with the distances of the range of distances and an exclusion block 28 for excluding between the detected distances D the ones placed outside the range and thus to top dress only the plants 6 present in the relative corridor 26.

Each configuration block 25 finally comprises an adjustment block 29 for varying one of or both the end values of the range of measurements, so as to vary the width of the corridor 26 or the position of the corridor 26 in the direction 21 relative to the relative outlet 12.

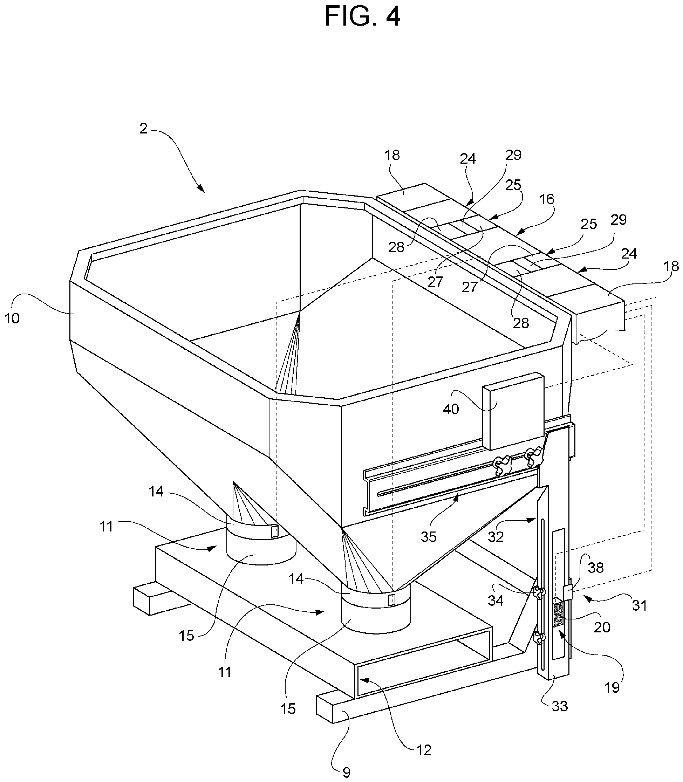

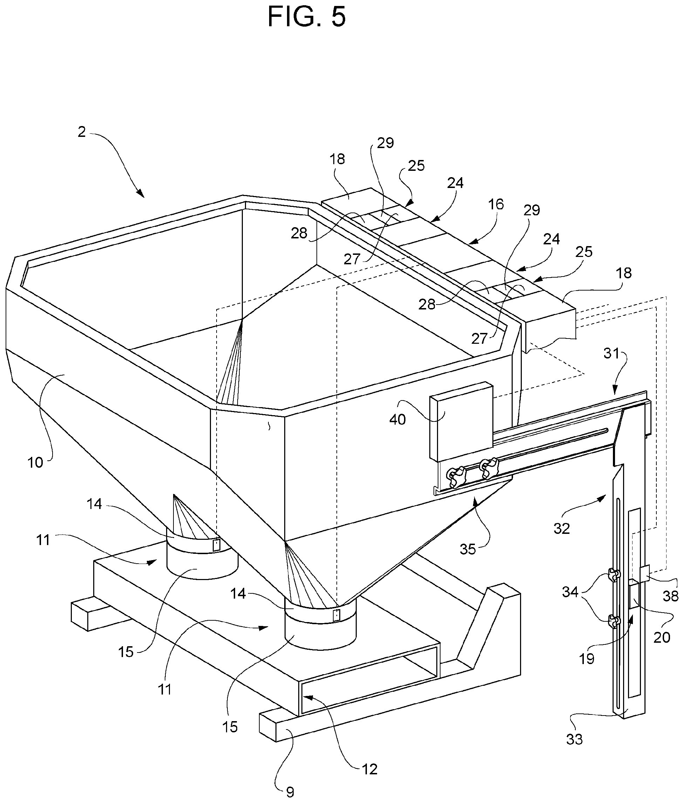

With reference to Figure 2 and, in particular, to Figures 4 and 5, each setting assembly 24 comprises, for each emitter 20 a respective adjustment device 31 of the position of the relative emitter 20 relative to the relative outlet 12 and independent of the other adjustment device 31.

In particular, each adjustment device 31 comprises a respective upside-down L bracket 32, a vertical arm 33 thereof defining a vertical guide to which a slide 34 is coupled. The slide 34 carries integrally connected the relative emitter 20 and is movable manually and in a continuous manner between two end stroke extreme positions. The position of each slide 34 and thus the height of the relative ground emitter 20 are set so as to exclude from the detection all of the plants 7 placed below the laser beam emitted by the emitter. In this manner, practically, all the low shrubs and the infesting plants are excluded.

Still with reference to Figures 4 and 5, the vertical arm 33 is manually adjustable in a direction parallel to the axis 3 and to the direction of forward movement 8 through a guide and slide assembly 35 between a set-back position (Figure 4) and a forward position (Figure 5). Each assembly 35 allows varying the start dispensing point K (Figure 3) of the dressing relative to the detected plant 6 and thus modifying an advance dispensing, i.e. the distance Dl from the detected plant 6 at which the dispensing starts. In this manner, it is possible to vary the distribution of the dosed portion of dressing in the surroundings of each detected plant 6.

The operation will now be described starting from the condition in which the assembly 2 is set for dosing a predefined amount of dressing and so as to detect and measure the distance of the sole plants 6 arranged in each corridor 26 and to exclude other shrubs, plants or other contaminating grasses, and taking into consideration for the sake of convenience the plants 6 of one single corridor 26. Starting from such condition, the assembly 2 is moved forward in the direction 8; irrespective of the forward movement speed of the tractor 1, of the state of the ground or of the distance between the plants 6, the moment the laser beam intercepts one of the plants 6 a presence signal is emitted, following which the unit 16 activates the dispensing device 15 which starts moving forward the amount of dressing dosed in advance relative to the instant the outlet 12 transits in front of the plant 6. Depending on the set adjustment, the dispensing ends with the lack of the presence signal or with a pre-set delay so that the dressing is distributed also for a section downstream of the plant 6. In this manner, the distribution of the dressing starts before or when the outlet 12 reaches the plant 6, is suspended once gone beyond the plant 6 and remains inactive up to the reaching of the following plant 6 distributing, in such manner, the dressing only around the plant 6.

According to a different embodiment mode, each laser device 19 comprises a shape detection block 38 for determining a geometrical or dimensional feature of the plants 6, for example the width thereof in the direction of forward movement 8 during the forward movement of the assembly 2 and for instantly varying the set amount of dressing as a function of the detected feature.

Alternatively, each laser device 19 is devoid of the detection block 38 and comprises an optic block 40, schematically illustrated, for example, of the type comprising a camera and a shape comparator for comparing a detected shape with stored sample shapes and consequently varying the amount of dosed dressing acting on the relative dosing device 14.

Experimentally it was possible to note that the described assembly 2 allows, the fertilisation of the plant being equal, reducing up to 60% the amount of dressing relative to the known continuous dressing assemblies. This is due to the fact that the dressing necessary for the plant is distributed exactly and only in the surroundings of the plant to be dressed and not continuously between a plant and the other preventing the dressing of the shrubs and infesting grasses when present between two consecutive plants.

Then, the control of the dressing by an electronic unit makes the dressing independent of the experience and of the abilities of the operator operating the machine, whose task is only to move the tractor forward between the plants. The assembly 2, in fact, is capable of autonomously detecting only the plants that are intended to be top dressed irrespective of their relative position and possibly of automatically varying the set dosing thereof if provided of the shape detection block.

Finally, based on the foregoing, it is evident that modifications and variations can be made to the described distributor assembly 2 without thereby departing from the scope of protection of the independent claims. In particular, the described distributor assembly 2 could comprise containers and dosing and dispensing assemblies different from the ones indicated by way of example for the distribution of chemical products different from the one indicated both in form of powders and liquid, but also for dispensing organic products.

## Claims

1. A distributor assembly of a chemical or organic product for the treatment of plants, the distributor assembly comprising a support frame designed to be connected to a motor driven machine for moving the distributor assembly in a direction of forward movement, a container for containing the chemical or organic product carried by said frame, and a dispensing device for dispensing the chemical or organic product and having at least one outlet opening for dispensing the chemical or organic product in a dispensing direction transverse to said direction of forward movement, **characterised in that** it further comprises sensor means for detecting the presence of each of said plants to be treated during the forward movement of said container in said direction of forward movement, dosing means for dosing, for each of said plants, a respective amount of chemical or organic product, and an electronic command and control unit configured to activate said dispensing device at least in the presence of a signal emitted by said sensor means so as to dispense said amount of product at least when the outlet transits in front of the detected plant and to temporarily suspend the dispensing between the detected plant and a subsequent plant.

2. The assembly according to claim 1, **characterised in that** said sensor means comprise at least one laser device that comprises emitter means for emitting a laser beam in an emission direction transverse to said longitudinal direction and being configured to detect the distance of said plant from said emitter means in said emission direction.

3. The assembly according to claim 2, **characterised in that** said emission direction is parallel to said dispensing direction and orthogonal to said direction of forward movement.

4. The assembly according to claim 2 or 3, **characterised in that** said laser device comprises configuration means for setting a range of said distances and defining a virtual corridor containing the plants to be fertilised, comparator means for comparing the distances progressively detected with said range of distances and exclusion means for excluding between the detected distances those positioned outside said range.

5. The assembly according to claim 4, **characterised in that** said laser device comprises first adjustment means for varying at least one of the end values of said range of measurements.

6. The assembly according to claim 4 or 5, **characterised in that** said laser device comprises second adjustment means for varying both end values of said range of measurements.

7. The assembly according to any one of claims 2 to 6, **characterised in that** it comprises third adjustment means for adjusting the position of said emitter means relative to said outlet opening in a direction parallel to said direction of forward movement.

8. The assembly according to any one of claims 2 to 7, **characterised in that** it comprises fourth adjustment means for adjusting the height of said emitter means from the ground.

9. The assembly according to any one of the preceding claims, **characterised in that** it comprises detection means configured to detect a geometrical or dimensional feature of each said plant, to compare the detected feature with sample features and to emit a corresponding signal; said dosing means comprising adjustment means for varying said amount of chemical or organic product as a function of said corresponding signal.

10. A distribution method of a chemical or organic product for the treatment of plants using a distributor assembly as claimed in claim 1, the method comprising the steps of arranging the chemical or organic product to be distributed in the container, of moving the container between the plants in a direction of forward movement and of dispensing the chemical or organic product through at least one outlet opening and in a dispensing direction transverse to the direction of forward movement, the method **being characterised by** detecting the presence of each of said plants to be treated during the forward movement of the container in the direction of forward movement, by dosing, for each of said plants, a respective amount of chemical or organic product and by controlling the dispensing device at least in the presence of a plant signal emitted by the sensor means so as to dispense said amount of product at least when the outlet transits in front of the detected plant and to temporarily suspend the dispensing between the detected plant and a subsequent plant.

11. The method according to claim 10, **characterised in that** the detection of the plants is implemented by emitting via the emitter means a laser beam in an emission direction transverse to the direction of forward movement and by detecting the distance of each plant from the emitter means measured in said emission direction.

12. The method according to claim 11, **characterised by** defining at least one virtual corridor containing the plants to be treated setting a range of said detected distances, by comparing each of the distances progressively detected with said range of distances and by excluding the detected distances positioned outside said range thus sending the chemical or organic product to the plants present in said virtual corridor and excluding all the other plants outside said longitudinal virtual corridor.

13. The method according to claim 12, **characterised by** varying said range by modifying one or the other of, or both, the end dimensions of said range.
